(19) Europäisches Patentamt
European Patent Office
Office européen des brevets

(11) Publication number: 0 099 868 A1

# (12) EUROPEAN PATENT APPLICATION

(21) Application number: 83870057.3

(22) Date of filing: 08.06.83

(51) Int. Cl.$^3$: B 01 D 53/22

(30) Priority: 11.06.82 US 387569

(43) Date of publication of application: 01.02.84 Bulletin 84/5

(84) Designated Contracting States: BE CH DE FR GB IT LI NL

(71) Applicant: MONSANTO COMPANY
Patent Department 800 North Lindbergh Boulevard
St. Louis, Missouri 63166(US)

(72) Inventor: Knieriem, Herman, Jr.
2088 Sandy Bay Court
Chesterfield Missouri 63017(US)

(72) Inventor: Narayan, Raghu Subramani
912 Camargo Drive
Ballwin Missouri 63011(US)

(72) Inventor: Patton, Clyde Jerome
7012 Three Bridges Circle
Raleigh North Carolina 27612(US)

(74) Representative: McLean, Peter et al,
Monsanto Europe S.A. Patent Department Avenue de Tervuren 270-272 Letter Box No 1
B-1150 Brussels(BE)

## (54) Membrane gas separation processes.

(57) Membrane gas separation processes for permeating gas species which can adversely affect the permeation characteristics of a membrane are disclosed. Permeability creep induced by permeating gas species such as acid gases is reduced by maintaining the partial pressure of permeated acid gases at a sufficiently low level. In particular, processes for permeating acid gases such as $CO_2$ and $H_2S$ are disclosed.

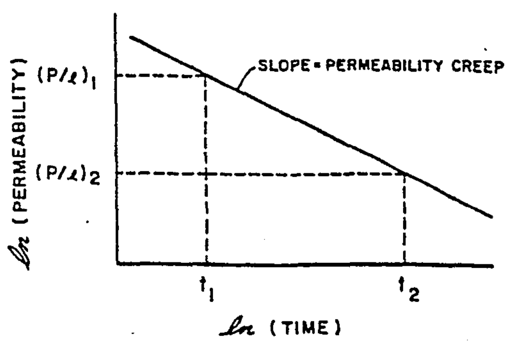


EP 0 099 868 A1

# MEMBRANE GAS SEPARATION PROCESSES

## BACKGROUND OF THE INVENTION

This invention pertains to membrane gas separation processes where there is at least one permeating gaseous species present which may be unduly detrimental to the utility of a polymeric membrane for the intended gas separation.

The viability of the use of polymeric membranes for gas separation, as compared to other separation procedures such as absorption, adsorption, and liquefaction, often depends on the cost of the permeation apparatus and its operating cost. Such cost factors include energy consumption, degree of selectivity of separation whioh is desired, the total pressure drop of gas components through the permeation apparatus which can be tolerated in conducting the separation procedure, the size and ease of use of such permeation apparatus, and especially the useful life of membranes in the operating environment. In order for selective separation of the one or more desired components in a gaseous stream by the use of polymeric gas separation membranes to be commercially attractive, the membranes must provide an adequately selective separation of one or more desired components at a sufficiently high flux. That is, the selective permeation rate of the desired permeating gas species per unit of membrane surface area must be sufficiently high. Moreover, the membranes must also be capable of withstanding the environmental conditions to which they may be subjected during the separation operation, so that the useful life of membranes used to effect the separation is economically attractive.

Polymeric gas separation membranes are often prepared in flat

film and in hollow fiber form. Flat film membranes may not be as attractive as other membrane configurations due to the need for film membranes to be supported to withstand operating conditions such as high pressure differentials and due to the overall complexity of the permeation apparatus containing flat film membranes. Membranes in the configuration of hollow fibers avoid many of the deficiencies of flat film membranes for many separation operations. Hollow fiber membranes are generally self-supporting, even under operating conditions of high differential pressures, and can provide a substantially greater amount of membrane surface area per unit volume of separation apparatus than that which may be provided by flat film membranes. Thus membrane separation apparatus containing hollow fiber membranes may be attractive from the standpoint of convenience, size and reduced complexity of design. However, in order to provide permeation apparatus which is commercially viable on an economic basis, any membrane, even if inherently capable of providing desired selectivities of separation, fluxes and strength, must also be capable of maintaining these desired properties over an extended period of time in what may be an adverse operating environment. This extended period of time is denoted the "useful life" of the membrane.

A particularly convenient analytical characteristic of polymeric gas permeable membranes includes the permeability of the membrane for a specific gas through the membrane. The permeability ($P_a/\ell$) of a membrane for gas "a" of a gas mixture through a membrane of thickness "$\ell$" is the volume of gas, referred to standard temperature and pressure (STP), which passes through the membrane per unit of surface area of membrane, per unit of time, per unit of differential partial pressure of the permeating species across the thickness of the membrane. One method for expressing permeabilities is cubic centimeters (STP) per square centimeter of membrane area per second per differential partial pressure of 1 centimeter of mercury across the membrane thickness ($cm^3$(STP)/$cm^2$-sec-cmHg). Unless otherwise noted, all permeabilities are reported herein at standard temperatures and pressures of 15.6°C. and 1 bar, respectively. The permeabilities are reported in gas permeation units (GPU), which are $cm^3$(STP)/$cm^2$-sec-cmHg x $10^6$; thus 1 GPU is 1 x $10^{6}$ $cm^3$(STP)/$cm^2$-sec-cmHg. Another convenient relationship for expressing gas permeation characteristics of membranes is separation factor. A separation factor, $\alpha$ a/b, for a membrane for a given pair of gases "a" and "b" is defined as the ratio of the permeability ($P_a/\ell$) of a membrane of thickness "$\ell$" for a gas "a" of a gas mixture to the permeability ($P_b/\ell$) of the same membrane to gas "b".

In practice, separation factor with respect to a given pair of gases for a given membrane can be determined by employing numerous techniques which provide sufficient information for calculation of permeabilities for each of the gases. Several of the many techniques available for determining permeabilities and separation factors are disclosed by Hwang, et.al., Techniques of Chemistry, Volume VII, Membranes in Separations, John Wiley & Sons, 1974, at Chapter 12, pages 296-322.

Measurements can be made for pure gas permeation or for blend gas permeation. However, experience has shown that the measured permeability of a membrane for a gas species is higher for pure gas permeation than for blend gas permeation. In general, it is more desirable to determine gas permeation characteristics for blend gases, since the permeabilities and separation factors more closely predict actual membrane gas separation performance characteristics.

Ideally it is preferred to have a polymeric membrane with no deterioration of permeability with time. However, deterioration of permeability is generally observed, resulting in less than desirable membrane performance. Accordingly much effort has been directed to developing polymeric membrane materials with enhanced permeation stability. Effort has also been directed to determining operating environments which produce the highest permeation performance as measured in terms of permeability and separation factor, with the lowest deterioration of permeability.

A particularly valuable analytical tool for evaluating the stability of polymeric membrane permeability properties is the measurement of permeability creep. Permeability creep is defined as the time rate of change of permeability of a particular gas species through a membrane. A convenient method for determining permeability creep is provided by the slope of the relationship of the logarithm of permeability of a species through the membrane as a function of the logarithm of time. (See, for instance, Figure 1,

which is a log-log plot of permeability of a membrane of thickness "$\ell$" for species "i" ($P_i/\ell$), versus time "t". Experience has shown that such a relationship is conveniently approximated by a straight line whose negative slope defines permeability creep according to the following relationship, illustrated by Figure 1.

$$\text{Permeability Creep} = \frac{\log (P_i/\ell)_1 - \log (P_i/\ell)_2}{\log t_2 - \log t_1}$$

$$= - \frac{\log (P_i/\ell)_2 - \log (P_i/\ell)_1}{\log t_1 - \log t_1}$$

$$= - \frac{\log \dfrac{(P_i/\ell)_2}{(P_i/\ell)_1}}{\log \dfrac{t_2}{t_1}}$$

Since units of the fractions of the logarithms cancel, permeability creep is a dimensionless number. And, if permeability diminishes with time (as it usually does), permeability creep is a negative number, for instance -0.1.

The permeability rate changes with time may also be expressed as an exponential function of the form $(P_a/\ell)_2 = (P_a/\ell)_1, (t_2/t_1)^{-m}$, where $(P_a/\ell)_2$ is the permeability of the membrane of thickness "$\ell$" for gas "a" at time "$t_2$"; $(P_a/\ell)_1$ is the permeability of the same membrane of thickness "$\ell$" for the same gas "a" at an earlier time "$t_1$"; and "-m" is the slope of a logarithmic plot of permeability versus time. The value of "-m" represents permeability creep.

Since the economic viability of membrane separation processes depends to a significant degree on the performance of the membrane system with time, permeability creep is a key indicator of the useful life of the membrane as illustrated in the following Table I.

TABLE I

PERMEABILITY, $(P/\ell)_2$ [GPU]

| Permeability Creep (-m) | Time in Operation (any elapsed time unit) 1 | 12 | 60 |
|---|---|---|---|
| -0.01 | 100 GPU | 98 GPU | 96 GPU |
| -0.03 | 100 | 93 | 88 |
| -0.07 | 100 | 84 | 75 |
| -0.10 | 100 | 78 | 66 |
| -0.20 | 100 | 61 | 44 |

The data in Table I illustrate that a membrane having a permeability creep of -0.20 would be generally undesirable as compared to a membrane having a permeability creep of -0.01. That is, the economic life of a membrane having a permeability creep of -0.20 deteriorates significantly within a short time---for instance, by about 40% between time increments 1 and 12. On the other hand, the economic life of a membrane having a permeability creep of -0.01 would experience only minor deterioration in a similar time period---for instance, about 2% between time increments 1 and 12.

Often gas mixtures for which a membrane gas separation is desired may contain one or more species which may be detrimental to the operating characteristics of the polymeric membranes, for instance to the permeability of gases through the membrane. Such species may adversely affect the polymeric membrane---for instance, by solvation, plasticization, or swelling. Often the adverse effect on the polymeric membrane may be a significant reduction in permeability, a significant reduction in strength of the membrane, or a reduction in selectivity of the membrane for one desired permeating gas over the other permeating gases. The adverse effects may be rapidly catastrophic or may be manifested in a gradual degradation of desired properties over time. Accordingly such adverse effects can often be monitored by measuring permeability creep.

The adversely affecting species may be present in trace

amounts or may even be present in significantly high quantities. For instance, in the case of a membrane gas separation process for the recovery of hydrogen from industrial gas streams such as purge streams from an ammonia synthesis loop, the adversely affecting species may be ammonia, $NH_3$. In other cases, such as the membrane gas separation of hydrogen from a refinery purge stream, the adversely affecting species may be an aromatic species such as toluene.

Depending on the particular membrane, adversely affecting species, such as ammonia, an aromatic species, or water, may be detrimental to the membrane even if the concentration, as measured in terms of partial pressure, of the adversely affecting species is relatively low. In other cases---for instance in the separation of an acid gas such as carbon dioxide or hydrogen sulfide from hydrocarbon gases such as methane---the acid gas is often present in substantial concentrations and is the predominant permeating species. Unfortunately, an acid gas, such as carbon dioxide or hydrogen sulfide, can have an adverse effect on a polymeric membrane of such material as, for instance, polysulfone. In this regard it is known that an acid gas, such as carbon dioxide, can under some conditions plasticize an otherwise rigid structure of a polymeric material such as polysulfone. A membrane of plasticized polymeric material is expected to deform under the stress of differentials in pressure imposed across the membrane to effect permeation.

For instance, it has been found that when a polymeric hollow fiber membrane is exposed to a feed gas mixture of carbon dioxide and methane, the permeability of carbon dioxide ($P_{CO_2}/\ell$) and the permeability of methane ($P_{CH_4}/\ell$) tend to decrease as the partial pressure of carbon dioxide is increased from, for instance, about 2.8 kg/cm$^2$ to about 8.4 kg/cm$^2$. Moreover, it has been found that certain polymeric hollow fiber membranes when exposed to high concentrations of carbon dioxide in the feed gas mixture for extended periods of time will exhibit undesirable permeability creep, for instance, in the range of -0.1 or even more negative.

What has been discovered is that polymeric membranes can be successfully operated to separate adversely affecting gas species from a gaseous mixture under conditions previously expected to be

adverse with little permeability creep and with enhanced permeability. For instance, by the membrane separation process of this discovery, an adversely affecting species such as an acid gas like carbon dioxide can be advantageously separated from a hydrocarbon gas like methane by selective permeation through a polymeric membrane not only without the previously expected adverse effect of high permeability creep, but also with enhanced permeability of carbon dioxide and enhanced separation factor of carbon dioxide to methane.

The effect of specific adversely affecting species varies, of course, depending on the polymeric membrane utilized. Some polymeric membranes are inherently more resistant to some otherwise adversely affecting species than to others. Moreover, some polymeric membranes have been shown to tolerate higher levels of otherwise adversely affecting species. What has been discovered is a process for advantageously separating an adversely affecting species by selective permeation through a polymeric membrane which exhibits substantial permeability creep, for instance, more negative than about -0.1, when exposed to critical partial pressures of the adversely affecting species.

The term "critical partial pressure" as used herein means the gas phase concentration which describes the relationship of the permeability creep characteristics of the polymeric membrane when exposed to potentially adversely affecting gas species. The term "critical partial pressure" defines the gas phase concentration of an adversely affecting species at or above which the polymeric membrane will exhibit permeability creep more negative than about -0.1. Similarly, it is intended that a membrane exposed to a potentially adversely affecting species at less than the "critical partial pressure" will exhibit permeability creep to a substantially lesser degree, i.e., the permeability creep will generally be less negative than about -0.1. As used herein, the term "critical partial pressure" is intended to have no relationship to the term "critical pressure", which relates to the physical constant which characterizes the pressure above which a gas cannot be liquified by a decrease in temperature.

## SUMMARY OF THE INVENTION

The invention relates to a membrane permeation process for separating at least one gas in a gaseous mixture from at least one other gas in said gaseous mixture by selective permeation and providing a permeate gas mixture enriched in said at least one gas comprising

(a) contacting a feed side surface of a polymeric membrane with a gaseous mixture, said membrane exhibiting selectivity to the permeation of at least one gas of said gaseous mixture and said membrane having a permeability creep more negative than about -0.1 when exposed to critical partial pressures of said at least one gas;

(b) permeating a gas mixture enriched in said at least one gas into and through the membrane to a permeate side of said membrane, said permeating being effected by maintaining the partial pressure of said at least one gas at the feed side surface of the membrane higher than the partial pressure of said at least one gas at the permeate side of the membrane;

(c) removing a non-permeate gas mixture depleted in said at least one gas from the feed side surface of the membrane; and

(d) removing a permeate gas mixture enriched in said at least one gas from the permeate side of the membrane at a sufficiently high rate that the partial pressure of said at least one gas at the permeate side of the membrane is maintained at a partial pressure less than the critical partial pressure of said at least one gas such that the permeability creep of the membrane is less negative than -0.1.

The process of this invention further relates to a membrane separation process for separating at least one gas from a gaseous feed mixture containing at least one other gas which is an adversely affecting species. Such membrane separation process comprises

(a) contacting a feed side surface of a polymeric membrane with a gaseous mixture, said membrane exhibiting selectivity to the permeation of at least one gas of said gaseous mixture and said membrane having a permeability creep more negative than about -0.1 when exposed to critical partial pressures of at least one other gas of said gaseous mixture;

(b) permeating a gas mixture enriched in said at least one gas and containing an amount of said at least one other gas into and through the membrane to a permeate side of said membrane, said permeating being effected by maintaining the partial pressure of said at least one gas at the feed side surface of the membrane higher than the partial pressure of said at least one gas at the permeate side of the membrane;

(c) removing a non-permeate gas mixture depleted in said at least one gas from the feed side surface of the membrane; and

(d) removing a permeate gas mixture enriched in said at least one gas and containing an amount of said at least one other gas from the permeate side of the membrane at a sufficiently high rate that the partial pressure of said at least one other gas at the permeate side of the membrane is maintained at a partial pressure less than the critical partial pressure of said at least one other gas such that the permeability creep of the membrane is less negative than -0.1.

A preferred aspect of this invention relates to a membrane separation process for separating carbon dioxide from a feed gas mixture comprising carbon dioxide and methane comprising

(a) contacting a feed side surface of a multicomponent hollow fiber membrane with the feed gas mixture, said multicomponent hollow fiber membrane exhibiting selectivity to the permeation of carbon dioxide over that of methane and said multicomponent hollow fiber membrane having a permeability creep more negative than about -0.1 when exposed to critical partial pressures of carbon dioxide;

(b) permeating a carbon dioxide-enriched gas mixture into, and through to a permeate side of, said multicomponent hollow fiber membrane, said permeating being effected by maintaining the partial pressure of carbon dioxide at the feed side surface of said multicomponent hollow fiber membrane higher than the partial pressure of carbon dioxide at the permeate side of said multicomponent hollow fiber membrane;

(c) removing a carbon dioxide-depleted non-permeate gas mixture from the feed side surface of said multicomponent hollow fiber membrane; and

(d) removing a carbon dioxide-enriched permeate gas mixture from the permeate side of said multicomponent hollow fiber membrane

at a sufficiently high rate that the partial pressure of carbon dioxide at the permeate side of said multicomponent hollow fiber membrane is maintained at a partial pressure less than the critical partial pressure of carbon dioxide such that the permeability creep of the multicomponent hollow fiber membrane is less negative than -0.1.

## DETAILED DESCRIPTION OF THE INVENTION

The process of this invention is advantageously useful in membrane gas separations where the gaseous mixture contacting the polymeric membrane contains potentially adversely affecting gas species which may be present at the permeate side of the membrane at critical partial pressures. Such potentially adversely affecting gas species may be a desired permeating gas species or simply a contaminant gas which happens to be permeated with the desired permeating gas species. Such potentially adversely affecting gas species may be condensible within the polymeric membrane and may promote significant permeability creep in the membrane for the desired permeating species by presence at the permeate side of the membrane at critical partial pressure.

The process of this invention is useful for membrane gas separations where the potentially adversely affecting gas species is a gas such as water; an aromatic gas like benzene, toluene or xylene; a sulfur-containing gas like hydrogen sulfide, sulfur dioxide, sulfur trioxide, carbonyl sulfide, or methyl mercaptan; a nitrogen-containing gas such as ammonia, a nitrogen oxide or a cyanogen gas; a carbon-containing gas such as carbon dioxide; or other substituted methyl gases; or combinations of such gases and the like.

The process of this invention is particularly advantageous for separating acid gas components such as carbon dioxide and/or hydrogen sulfide from a gas mixture containing hydrocarbon gases--- for instance, methane, ethane, propane, butane, etc. The polymeric membranes useful in the process of this invention comprise polymeric membranes in flat film or hollow fiber form. Anisotropic membranes are generally more useful for membrane gas separations. Such

anisotropic membranes have a thin, dense layer, usually on at least one surface of the membrane, which comprises an open cellular support matrix. It is generally desirable that the thin, dense layer be on the outer surface of the anisotropic polymeric hollow fiber membranes. The preferred anisotropic polymeric hollow fiber membranes useful in this invention are multicomponent membranes comprising a coating in occluding contact with a porous separation membrane of material which exhibits selective permeation of at least one gas of the gaseous mixture over that of one or more remaining gases in the gaseous mixture. Such multicomponent membranes are described in United States Patent 4,230,463, issued October 28, 1980.

Other hollow fiber membranes useful in the process of this invention can be provided by a number of techniques known to those skilled in the hollow fiber membrane art. Particularly useful procedures for preparing such membranes are set forth by Brooks, et al., in Belgian Patent 882,475, granted September 29, 1980. The polymeric material comprising such membranes is preferably selected on the basis of its separation capabilities, for instance, its ability to provide the desired selectivity of separation in a suitable permeate flux while maintaining sufficient strength and chemical resistance, particularly with respect to the components of the fluid streams intended to be treated using the membrane.

The selective permeation of many fluids, including gases, in many polymers has been reported. In these reported permeations, the mechanism of the separation apparently involves an interaction with the material of the membrane. Hence widely differing separation capabilities can be achieved by the use of different polymers. For instance, polyacrylonitrile permits nitrogen to permeate over ten times as quickly as methane; whereas in a polysulfone membrane methane may permeate slightly more quickly than nitrogen.

Typical polymers which may be suitable for making membranes useful in the process of this invention include substituted and unsubstituted polymers selected from polysulfones; polyethersulfones; poly(styrenes), including styrene-containing copolymers such as acrylonitrile-styrene copolymers and styrene-vinylbenzylhalide copolymers; polycarbonates; cellulosic polymers, such as cellulose acetate-butyrate, cellulose propionate, ethyl cellulose, methyl

cellulose, nitrocellulose, etc.; polyamides and polyimides, including aryl polyamides and aryl polyimides; polyethers; polyacetal; poly(arylene oxides) such as poly(phenylene oxide) and poly(xylylene oxide); poly(esteramide-diisocyanate); polyurethanes; polyesters (including polyarylates), such as poly(ethylene terephthalate), poly(alkyl methacrylates), poly(alkyl acrylates), poly(phenylene terephthalate), etc.; polysulfides; polymers from monomers having alpha-olefinic unsaturation other than mentioned above, such as polyvinyls, e.g., poly(vinyl chloride), poly(vinyl fluoride), poly(vinylidene chloride), poly(vinylidene fluoride), poly(vinyl alcohol); poly(vinyl esters) such as poly(vinyl acetate) and poly(vinyl propionate), poly(vinyl pyridines), poly(vinyl pyrrolidones), poly(vinyl ethers), poly(vinyl ketones); poly(vinyl aldehydes) such as poly(vinyl formal) and poly(vinyl butyral), poly(vinyl amines), poly(vinyl phosphates), and poly(vinyl sulfates); polyallyls; poly(benzobenzimidazole); polyhydrazides; polyoxadiazoles; polytriazoles; poly(benzimidazole); polycarbodiimides; polyphosphazines, etc. and interpolymers including block interpolymers containing repeating units from the above, such as terpolymers of acrylonitrile-vinyl bromide-sodium salt of para-sulfophenylmethallyl ethers; and grafts and blends containing any of the foregoing. Typical substituents providing substituted polymers include halogens such as fluorine, chlorine and bromine; hydroxyl groups; lower alkyl groups; lower alkoxy groups; monocyclic aryl; lower acryl groups; etc.

One class of polymers which may be attractive for many gas separations are copolymers of styrene and acrylonitrile, or terpolymers containing styrene and acrylonitrile. Frequently the styrene is up to about 60 or 70, say, about 10 to 50 mole percent of the total monomer in the polymer. Advantageously the acrylonitrile monomer comprises at least about 20, e.g., about 20 to 90, often about 30 to 80 mole percent of the polymer. Other monomers which may be employed with styrene and acrylonitrile to provide, for instance, terpolymers, include olefinic monomers such as butene, butadiene, methylacrylate, methylmethacrylate, maleic anhydride, and the like. Other monomers which may be employed include vinyl chloride. The copolymers or terpolymers of styrene and acrylonitrile often have an average molecular weight of at

least about 25,000 or 50,000---say about 75,000 to 500,000 or more.

One of the preferred polymers for anisotropic membranes is polysulfone, due to its strength, chemical resistance and relatively good gas separation capabilities. Typical polysulfones are characterized by having a polymeric backbone comprised of the repeating structural unit:

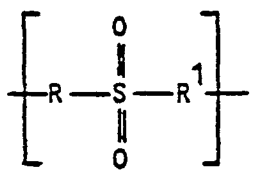

where R and $R^1$ can be the same or different and are aliphatic or aromatic hydrocarbyl-containing moieties, say, of 1 to about 40 carbon atoms, wherein the sulfur in the sulfonyl group is bonded to aliphatic or aromatic carbon atoms, and the polysulfone has an average molecular weight suitable for film or fiber formation, often at least about 8,000 or 10,000. When the polysulfone is not crosslinked, the molecular weight of the polysulfone is generally less than about 500,000 and is frequently less than about 100,000. The relating units may be bonded---i.e., R and $R^1$ may be bonded---by carbon-to-carbon bonds or through various linking groups such as

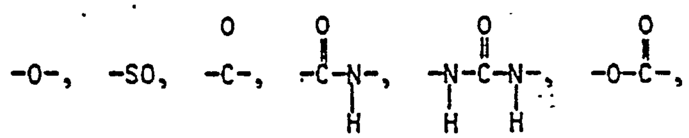

etc.

Particularly advantageous polysulfones are those in which at least one of R and $R^1$ comprises an aromatic hydrocarbyl-containing moiety and the sulfonyl moiety is bonded to at least one aromatic carbon atom. Common aromatic hydrocarbyl-containing moieties comprise phenylene and substituted phenylene moieties, bisphenyl and substituted bisphenyl moieties, bisphenyl methane and substituted bisphenyl methane moieties having the nucleus

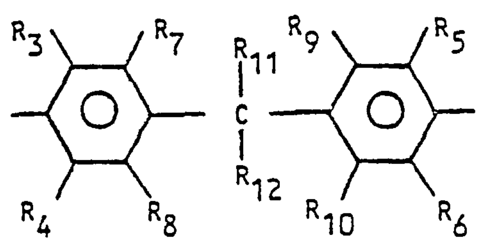

substituted and unsubstituted bisphenyl ethers of formula

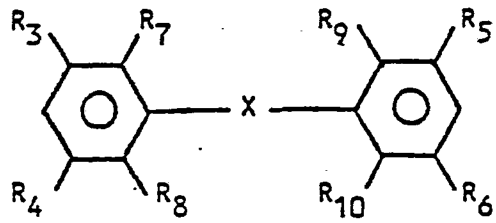

wherein X is oxygen or sulfur; and the like. In the depicted bisphenyl methane and bisphenyl ether moieties, $R_3$ to $R_{12}$ represent substituents which may be the same or different and have the structure

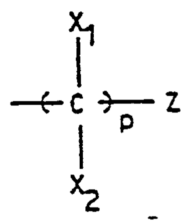

wherein $X_1$ and $X_2$ are the same or different and are hydrogen or halogen (e.g., fluorine, chlorine, and bromine); p is 0 or an integer (e.g., of 1 to about 6); and Z is hydrogen, halogen (e.g., fluorine, chlorine and bromine), $\leftarrow Y \rightarrow_q R_{13}$ (in which q is 0 or 1; Y is -O-, -SO, -SSO, $-O\overset{O}{\overset{\|}{C}}-$, or $-\overset{O}{\overset{\|}{C}}-$; and $R_{13}$ is hydrogen, substituted or unsubstituted or unsubstituted alkyl, say, of 1 to about 8 carbon atoms, or substituted or unsubstituted aryl, say, monocyclic orbicyclic of about 6 to 15 carbon atoms), heterocyclic with the heteroatom being at least one of nitrogen, oxygen and sulfur and being monocyclic or bicyclic with about 5 to 15 ring atoms, sulfato and sulfono, especially lower alkyl-containing or monocyclic or bicyclic aryl-containing sulfato or sulfono, phosphorous-containing moieties such as phosphino and phosphato and phosphono, especially lower alkyl-containing or monocyclic or bicyclic aryl-containing phosphato or phosphono, amine including primary, secondary, tertiary and quaternary amines often containing lower alkyl or monocyclic or bicyclic aryl moieties, isothioureyl, thioureyl, guanidyl, trialkylsilyl, trialkylstannyl, trialkylplumbyl, dialkylstibinyl, etc. Frequently the substituents on the phenylene groups of the bisphenyl methane and bisphenyl ether moieties are provided as at least one of $R_3$ to $R_6$, and $R_7$ to $R_{10}$ are hydrogen. The polysulfones having aromatic hydrocarbyl-containing moieties in general possess

good thermal stability, are resistant to chemical attack, and have an excellent combination of toughness and flexibility.

Useful polysulfones are sold under trade names such as "P-1700" and "P-3500" by Union Carbide. Both commercial products are bisphenol methane-derived polysulfones (specifically, bisphenol A-derived) having a linear chain of the general formula

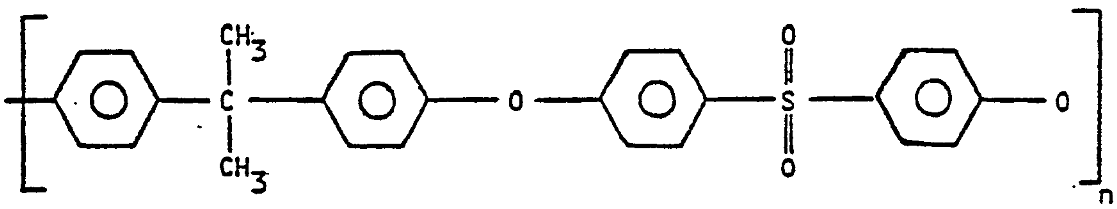

where n, representing the degree of polymerization, is about 50 to 80. Poly(arylene ether) sulfones are also advantageous. Polyether sulfones having the structure

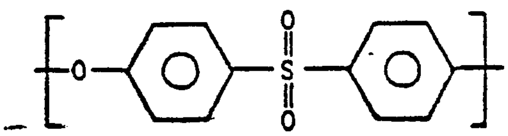

are available from ICI, Ltd., Great Britain, and are also useful. Still other useful polysulfones could be prepared through polymer modifications, for example, by cross-linking, grafting, quarternization, etc.

Other advantageous polymers include polyimides and polyphenylene oxides, including substituted polyphenylene oxides such as brominated polyphenylene oxides.

Polymeric membranes useful in this invention are generally assembled into a permeator which allows for proper distribution of the feed gas mixture to the feed side surface of the membrane for effective separation and removal of the non-permeate and permeate gases. Polymeric membranes in hollow fiber form are particularly attractive in that the hollow fibers are generally self-supporting, even at relatively high differential pressures, and provide a greater amount of membrane surface area per unit volume of permeator than that which may be provided by flat film membranes. Thus permeators containing hollow fiber membranes may be attractive from the standpoint of convenience, size and reduced complexity in design. Commercially attractive permeators must be able to withstand the operating conditions to which they may be subjected during separation operations and should be relatively

non-complex and easily assemblable to facilitate manufacturing. A variety of permeator designs utilizing hollow fiber membranes have been developed for separation operations. Generally hollow fiber membranes are arranged in the form of a bundle embedded in at least one tube sheet which is sealed in a permeator shell. Among the useful designs are those disclosed by Rosenblatt in United States Patent 3,616,928; Maxwell, et al., in United States Patent 3,339,341; McLain in United States Patent 3,422,008; Caracciolo in United States Patent 3,528,553; McNamara, et al., in United States Patent 3,702,658; and King, et al., in United States Patent 4,315,819.

The membrane separation processes of this invention are useful for numerous gas separation applications, since the polymeric membrane can be selected from a very large group of materials depending on the permeation properties of the material for the desired gas separation. Illustrative of such gas separation applications are hydrogen separations from gas mixtures containing, for instance, nitrogen, methane, carbon dioxide, argon, ammonia or aromatic species; carbon dioxide and/or hydrogen sulfide separation from gas mixtures containing, for instance, hydrocarbon gases like methane, ethane, and the like; and carbon dioxide separations from fossil fuel combustion gases which may contain water, nitrogen and nitrogen oxides, among other gases.

The process of this invention is advantageously useful in separating acid gas such as carbon dioxide and/or hydrogen sulfide from gas mixtures of, for instance, hydrocarbon gases such as methane, ethane, propane, and the like. Such gas mixtures are common in the petroleum and natural gas industries. For instance, in enhanced oil recovery processes utilizing carbon dioxide flooding, the casinghead gas from wellheads often comprises predominantly carbon dioxide and methane. It is desirable to separate these two gases, for instance, so that carbon dioxide can be reinjected for further enhanced oil recovery and so that methane can be provided for natural gas pipelines. In other instances, natural gas reservoirs often contain substantial quantities of carbon dioxide and/or hydrogen sulfide which must be removed before the predominantly methane-containing hydrocarbon gas can be utilized.

In still a further instance, it is possible to recover substantial quantities of methane by separating the carbon dioxide and methane-containing gas present in mature landfills.

Traditionally the required separations for removing gases such as carbon dioxide and hydrogen sulfide have included amine scrubbing, physical absorption and cryogenic processes, among others. Membrane gas separations can provide an economically attractive alternative for, or adjunct to, such traditional processes. However, gases such as carbon dioxide and/or hydrogen sulfide often adversely affect the economic life of polymeric membranes useful in such membrane separation processes, resulting in significant permeability creep of otherwise desirable polymeric membranes.

By the use of the process of this invention, the membrane gas separation of acid gas species such as carbon dioxide and/or hydrogen sulfide can be advantageously effected without the detrimental effects of permeability creep when the partial pressure of such acid gas species is maintained below the critical partial pressure of the acid gas species such that permeability creep for the polymeric membrane is less negative than -0.1. For instance, a multicomponent hollow fiber membrane comprising a coating of polysiloxane in occluding contact with a porous anisotropic hollow fiber membrane of polysulfone can be used to separate carbon dioxide from a mixture of carbon dioxide and methane by selective permeation of the carbon dioxide. However, it has been observed that such multicomponent hollow fiber membranes will exhibit a permeability creep more negative than about -0.1 when the partial pressure of carbon dioxide on the permeate side of the membrane is greater than the critical partial pressure of carbon dioxide---for instance, about 217 psia (15 $kg/cm^2$), or even lower. Moreover, a permeability creep of about -0.1 has been observed for the same multicomponent hollow fiber membrane when the partial pressure of carbon dioxide at the permeate side of the membrane is at 100 psia (7.03 $kg/cm^2$). On the other hand, when the same multicomponent hollow fiber membrane is used in a membrane separation process such that the partial pressure of carbon dioxide at the permeate side of the membrane is maintained below the critical partial pressure of carbon dioxide, for instance, at 73.4 psia (5.16 $kg/cm^2$), the membrane will

exhibit a permeability creep generally less negative than -0.1, say about -0.02.

The following examples are provided to assist in the understanding of the invention and are not in limitation of the invention.

EXAMPLE I

This example illustrates the tendency of a membrane to exhibit diminished performance characteristics when exposed to increasing concentrations of carbon dioxide in the range from about 18 volume % to about 36 volume % in a feed gas mixture.

A permeator was prepared utilizing multicomponent hollow fiber membranes comprising a coating of polysiloxane (Dow Corning Sylgard® 184) in occluding contact with a porous anisotropic hollow fiber membrane of polysulfone (Union Carbide P-3500). One end of a bundle of the hollow fiber membranes was sealed in a cured epoxy resin tube sheet such that the bores of the hollow fiber membranes communicated through the tube sheet. The other end of the hollow fiber membrane was sealed. The assembly of the bundle of hollow fiber membranes and tube sheet was sealed into an elongated tubular steel shell, having an inlet port and longitudinally distant outlet port to provide axial flow of a feed gas mixture through the shell in contact with the exterior surface of the hollow fiber membranes. A port was also provided to allow permeate gas to be evacuated from the bores of the hollow fiber membranes.

A feed gas mixture was flowed through the permeator at about 6 SCFM (47.2 $cm^3$/min) under conditions stated in Table II. Feed gas mixtures of carbon dioxide and hydrocarbon gases were provided, with carbon dioxide partial pressure ranging from about 40 psia (2.8 $kg/cm^2$) to about 80 psia (5.6 $kg/cm^2$).

TABLE II

PERMEABILITY OF CARBON DIOXIDE [GPU]

| Feed Gas | | | | | | |
|---|---|---|---|---|---|---|
| Carbon dioxide partial pressure | | | | | | |
| psia ($kg/cm^2$) | 41 (2.9) | 42 (3.0) | 49 (3.4) | 73 (5.1) | 79 (5.6) | 80 (5.6) |
| Permeability of carbon dioxide (GPU) | 57 | 53 | 47 | 30 | 46 | 37 |

feed gas pressure: 225 psia (15.8 $kg/cm^2$)
feed gas temperature: 120°F (49°C)
permeate gas pressure: 40 psia (2/8 $kg/cm^2$)

Table II indicates that the permeability of the multicomponent hollow fiber membrane is adversely affected by increasing concentrations of carbon dioxide in a feed gas mixture.

EXAMPLE II

This example illustrates the significantly adverse levels of permeability creep of a membrane when exposed to high concentrations of carbon dioxide.

A permeator utilizing multicomponent hollow fiber membranes was prepared as in Example I. A feed gas mixture of 70 volume % carbon dioxide and 30 volume % methane was provided to the permeator, which was operated under conditions stated in Table III. The permeabilities of the membrane for carbon dioxide decreased with time, as shown in Table III.

TABLE III

CARBON DIOXIDE PERMEABILITY OVER TIME

| Elapsed Time (days) | 1 | 3 | 6 | 8 | 10 | 13 | 15 |
|---|---|---|---|---|---|---|---|
| Carbon Dioxide Permeability (GPU) | 74 | 56 | 51 | 50 | 48 | 46 | 47 |

feed gas composition: $CO_2$ - 70 volume %; $CH_4$ - 30 volume %
feed gas pressure: 715 psia (50.3 kg/cm$^2$)
feed gas temperature: 86°F (30°C)
permeate gas pressure: 265 psia (18.6 kg/cm$^2$)
partial pressure of carbon dioxide in permeate:. 217 psia (15.3 kg/cm$^2$)

The permeability creep was determined from a log-log plot of the date in Table III to be -0.12.

EXAMPLE III

This example illustrates the process of this invention where stable membrane permeation is achieved.

Two permeators utilizing multicomponent hollow fiber membranes were prepared as in Example I. Membrane gas separations of feed gas mixtures comprising carbon dioxide and methane were simultaneously performed for 17 days after stable operation was established, under average process conditions set forth in Table IV. The permeability of the multicomponent hollow fiber membranes for carbon dioxide were calculated from data measurements and are set forth in Table V. The permeability creep was determined to be -0.1 for permeator A, which operated with the permeate gas mixture having a partial pressure of carbon dioxide of 100 psia (7.03 kg/cm$^2$) on the bore side surface of the multicomponent hollow fiber membrane. The permeability creep was determined to be -0.02, or essentially 0 considering experimental error in the measured data, for permeator B, which operated with a partial pressure of carbon dioxide of 73.4

psia (5.16 $kg/cm^2$) on the bore side surface of the multicomponent hollow fiber membrane.

TABLE IV

STABLE MEMBRANE PERMEATION BY THIS INVENTION

| GAS PARAMETERS | PERMEATOR A | PERMEATOR B |
|---|---|---|
| Feed Gas | | |
| Pressure | 630 psia(44.3 $kg/cm^2$) | 601 psia(43.3 $kg/cm^2$) |
| Temperature | 120°F (49°C) | 120°F (49°C) |
| Flow Rate | 8 SCFM (63 $cm^3$/min) | 5.5 SCFM (43 $cm^3$/min) |
| Composition | | |
| $CO_2$ | 75.6 volume % | 62.5 volume % |
| $CH_4$ | 10.7 | 16.0 |
| $C_2^+$ | 12.8 | 20.3 |
| $N_2$ | 0.9 | 1.2 |
| Carbon Dioxide Partial Pressure | 476.3 psia (33.5 $kg/cm^2$) | 385.0 psia (27.1 $kg/cm^2$) |
| Permeate Gas | | |
| Pressure | 88 psia(7.2 $kg/cm^2$) | 63 psia(5.5 $kg/cm^2$) |
| Composition | | |
| $CO_2$ | 97.1 volume % | 94.1 volume % |
| $CH_4$ | 1.8 | 3.7 |
| $C_2^+$ | 1.0 | 2.0 |
| $N_2$ | 0.1 | 0.2 |
| Carbon Dioxide Partial Pressure | 100.0 psia (7.03 $kg/cm^2$) | 73.4 psia (5.16 $kg/cm^2$) |

TABLE V

PERMEABILITY OF CARBON DIOXIDE [GPU]

| | ELAPSED TIME (days) | | | | | | | |
|---|---|---|---|---|---|---|---|---|
| | 0 | 3 | 5 | 7 | 10 | 12 | 14 | 17 |
| Permeator A | 36.4 | 35.4 | 33.7 | 34.4 | 31.8 | 31.3 | 31.5 | 31.4 |
| Permeability Creep: -0.1 | | | | | | | | |
| Permeator B | 22.4 | 23.8 | 22.9 | 24.2 | 22.9 | 23.1 | 22.1 | 24.8 |
| Permeability Creep: -0.02 | | | | | | | | |

EXAMPLE IV

This example further illustrates the process of this invention where stable permeation is achieved.

A permeator was prepared utilizing a multicomponent hollow fiber membrane comprising a coating of aminopropyltetrethoxy silane in occluding contact with a porous anisotropic hollow fiber membrane of brominated polyphenylene oxide. The permeator was physically constructed according to the procedure of Example I.

A feed gas mixture of 70 % by volume carbon dioxide and 30 % by volume methane was provided to the permeator for membrane gas separation under conditions stated in Table VI.

The permeate gas was removed from the permeator with the carbon dioxide partial pressure on the permeate side of the membrane being less than 5.25 $kg/cm^2$. After stable operation was achieved, the permeability of the multicomponent hollow fiber membrane for carbon dioxide was calculated from permeability data measurements which are set forth in Table VI. The permeability creep was determined to be essentially 0, indicating stable membrane performance.

TABLE VI

CARBON DIOXIDE PERMEABILITY OVER TIME

| | | | | | |
|---|---|---|---|---|---|
| Elapsed Time (days) | 0 | 4 | 6 | 12 | 14 |
| Carbon Dioxide Permeability (GPU) | 35 | 34.5 | 33.5 | 36.5 | 35.5 |

| | |
|---|---|
| **Feed Gas** | |
| Pressure | 615 psia (43/2 $kg/cm^2$) |
| Temperature | 122°F (50°C) |
| Composition | |
| $CO_2$ | 70 volume % |
| $CH_4$ | 30 volume % |
| Carbon Dioxide Partial Pressure | 430 psia (30.3 $kg/cm^2$) |
| **Permeate Gas** | |
| Pressure | 75 psia (5.3 $kg/cm^2$) |
| Carbon Dioxide Partial Pressure | < 75 psia (<5/3 $kg/cm^2$) |

WHAT IS CLAIMED IS:

1. A membrane permeation process comprising

(a) contacting a feed side surface of a polymeric membrane with a gaseous mixture, said membrane exhibiting selectivity to the permeation of at least one gas of said gaseous mixture and said membrane having a permeability creep more negative than about -0.1 when exposed to critical partial pressures of said at least one gas;

(b) permeating a gas mixture enriched in said at least one gas into and through the membrane to a permeate side of said membrane, said permeating being effected by maintaining the partial pressure of said at least one gas at the feed side surface of the membrane higher than the partial pressure of said at least one gas at the permeate side of the membrane;

(c) removing a non-permeate gas mixture depleted in said at least one gas from the feed side surface of the membrane; and

(d) removing a permeate gas mixture enriched in said at least one gas from the permeate side of the membrane at a sufficiently high rate that the partial pressure of said at least one gas at the permeate side of the membrane is maintained at a partial pressure less than the critical partial pressure of said at least one gas such that the permeability creep of the membrane is less negative than -0.1.

2. The process of claim 1 wherein said at least one gas comprises at least one of carbon dioxide, hydrogen sulfide, a sulfur oxide, water, an aromatic gas, carbonyl sulfide, methyl mercaptan, ammonia, a nitrogen oxide, cyanogen, or a substituted methyl gas.

3. The process of claim 2 wherein the gaseous mixture comprises carbon dioxide and methane.

4. The process of any of claims 1 to 3 wherein the membrane is a hollow fiber membrane.

5. The process of claim 4 wherein the hollow fiber membrane is a multicomponent hollow fiber membrane comprising a coating in occluding contact with at least one surface of a porous separation membrane.

6. The process of claim 5 wherein the porous separation membrane comprises at least one of a polysulfone, a polyethersulfone, a polyphenylene oxide, a polyimide, a cellulose acetate, or a bromine substituted polyphenylene oxide.

7. The process of claim 6 where the partial pressure of carbon dioxide at the permeate side of the membrane is maintained from about 0.35 to 7 $kg/cm^2$.

8. A membrane permeation process to separate carbon dioxide from a feed gas mixture comprising carbon dioxide and methane comprising

(a) contacting a feed side surface of a multicomponent hollow fiber membrane with the feed gas mixture, said multicomponent hollow fiber membrane exhibiting selectivity to the permeation of carbon dioxide over that of methane and said multicomponent hollow fiber membrane having a permeability creep more negative than about -0.1 when exposed to critical partial pressures of carbon dioxide;

(b) permeating a carbon dioxide-enriched gas mixture into, and through to a permeate side of, said multicomponent hollow fiber membrane, said permeating being effected by maintaining the partial pressure of carbon dioxide at the feed side surface of said multicomponent hollow fiber membrane higher than the partial pressure of carbon dioxide at the

permeate side of said multicomponent hollow fiber membrane;

(c) removing a carbon dioxide-depleted non-permeate gas mixture from the feed side surface of said multicomponent hollow fiber membrane; and

(d) removing a carbon dioxide-enriched permeate gas mixture from the permeate side of said multicomponent hollow fiber membrane at a sufficiently high rate that the partial pressure of carbon dioxide at the permeate side of said multicomponent hollow fiber membrane is maintained at a partial pressure less than the critical partial pressure of carbon dioxide such that the permeability creep of the multicomponent hollow fiber membrane is less negative than -0.1.

9. The process of claim 8 wherein the multicomponent hollow fiber membrane comprises a coating in occluding contact with a porous separation membrane comprising at least one of a polysulfone, a polyethersulfone, a polyphenylene oxide, a polyimide, a cellulose acetate, or a bromine substituted polyphenylene oxide.

10. The process of claim 9 wherein the partial pressure of carbon dioxide at the permeate side of the membrane is maintained from about 0.35 to 7 $kg/cm^2$.

11. A membrane permeation process comprising

(a) contacting a feed side surface of a polymeric membrane with a gaseous mixture, said membrane exhibiting selectivity to the permeation of at least one gas of said gaseous mixture and said membrane having a permeability creep more negative than about -0.1 when exposed to critical partial pressures of at least one other gas of said gaseous mixture;

(b) permeating a gas mixture enriched in said at least one gas and containing an amount of said at least one other gas into and through the membrane to a

permeate side of said membrane, said permeating being effected by maintaining the partial pressure of said at least one gas at the feed side surface of the membrane higher than the partial pressure of said at least one gas at the permeate side of the membrane;

(c) removing a non-permeate gas mixture depleted in said at least one gas from the feed side surface of the membrane; and

(d) removing a permeate gas mixture enriched in said at least one gas and containing an amount of said at least one other gas from the permeate side of the membrane at a sufficiently high rate that the partial pressure of said at least one other gas at the permeate side of the membrane is maintained at a partial pressure less than the critical partial pressure of said at least one other gas such that the permeability creep of the membrane is less negative than -0.1.

12. The process of claim 11 wherein said at least one other gas comprises at least one of carbon dioxide, hydrogen sulfide, an aromatic hydrocarbon gas, water, ammonia, a nitrogen oxide, cyanogen, methyl mercaptan, or a substituted methyl gas.

13. The process of claim 12 wherein said at least one gas comprises hydrogen, helium, oxygen, or nitrogen.

14. The process of any of claims 11 to 13 wherein the membrane is a hollow fiber membrane.

15. The process of claim 14 wherein the hollow fiber membrane is a multicomponent hollow fiber membrane comprising a coating in occluding contact with a porous separation membrane comprising at least one of a polysulfone, a polyethersulfone, a polyphenylene oxide, a polyamide, a cellulose acetate, or a bromine substituted polyphenylene oxide.

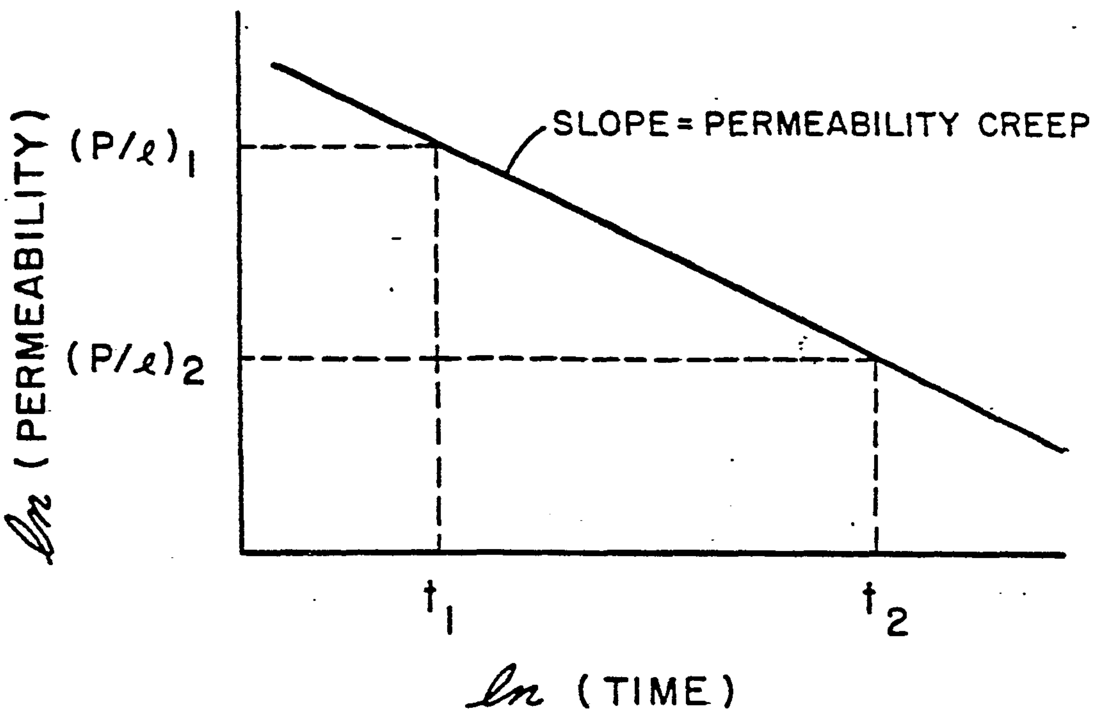

ln (PERMEABILITY)
(P/ℓ)1
(P/ℓ)2
SLOPE = PERMEABILITY CREEP
t1
t2
ln (TIME)

0099868

European Patent Office

# EUROPEAN SEARCH REPORT

Application number

EP 83 87 0057

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | AU-B- 495 540 (INSTITUTE OF GAS TECHNOLOGY) * Claims 1-3, 5 * | 1-3,5-12,15 | B 01 D 53/22 |
| | --- | | |
| A | EP-A-0 051 469 (MONSANTO CO.) * Claims 1, 3; example 1 * | 1,3-7, 11-15 | |
| | --- | | |
| A | CHEMIE-INGENIEUR-TECHNIK, vol. 36, no. 10, 1964 K. KÜMMERLE "Selektive Permeation durch nicht-poröse Membranen", pages 1028-1033 * Figure 18 * | 1,8,11 | |
| | ----- | | |
| | | | TECHNICAL FIELDS SEARCHED (Int. Cl. 3) |
| | | | B 01 D 53/00 |

The present search report has been drawn up for all claims

| Place of search | Date of completion of the search | Examiner |
|---|---|---|
| BERLIN | 18-09-1983 | BERTRAM H E H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document